# EUROPÄISCHE PATENTSCHRIFT

(11) **EP 1 907 761 B1**
(45) Veröffentlichungstag und Bekanntmachung des Hinweises auf die Patenterteilung: **23.11.2016**
(21) Anmeldenummer: 06776290.6
(22) Anmeldetag: 18.07.2006
(51) Int. Cl.: F24F 3/14, F24F 5/00

(54) **VORRICHTUNG UND VERFAHREN ZUR KÜHLUNG UND ENTFEUCHTUNG DER RAUMLUFT**
DEVICE AND METHOD FOR COOLING AND DEHUMIDIFYING ROOM AIR
PROCEDE ET DISPOSITIF POUR REFROIDIR ET ASSECHER L'AIR D'UNE PIECE

(30) Priorität: 19.07.2005 DE 102005034141
(43) Veröffentlichungstag der Anmeldung: 09.04.2008
(73) Patentinhaber: Fraunhofer-Gesellschaft zur Förderung der angewandten Forschung e.V., 80686 München (DE)
(72) Erfinder: KÜNZEL, Hartwig, 83607 Holzkirchen (DE); SEDLBAUER, Klaus, 83607 Holzkirchen (DE)
(86) Internationale Anmeldenummer: PCT/EP2006/007062
(87) Internationale Veröffentlichungsnummer: WO 2007/009752

(56) Entgegenhaltungen:
- WO-A-01/16546
- WO-A-95/22724
- WO-A-2006/058959
- FR-A- 2 637 510
- JP-A- H05 322 230

## Beschreibung

Die Erfindung betrifft eine Vorrichtung und Verfahren zur Kühlung und Entfeuchtung der Raumluft.

Aus dem Stand der Technik sind zum Heizen und Kühlen der Raumluft in Gebäuden vor allem Luft umwälzende Klimageräte bekannt. Der Betrieb dieser Geräte ist jedoch häufig mit Geräuschentwicklung und Zugerscheinungen verbunden. Als Alternative haben sich deshalb auch wasserführende Kühlelemente wie z. B. Kühldecken am Markt etabliert. Bei derartigen Kühlelementen wird die Kühlung der Luft eines Raumes dadurch erreicht, dass die Kühlelemente von einer Kühlflüssigkeit durchströmt und so gekühlt werden. Durch Wärmestrahlung und Wärmeleitung von den Kühlelementen an die umgebende Luft wird der Luft eines Raums Wärme entzogen und dem Kühlelement übergeben. Aus dem Kühlelement wird die Wärme durch die Kühlflüssigkeit abtransportiert. Derartige Kühlelemente haben jedoch eine begrenzte Kühlleistung. Die Temperaturen der Kühlelemente dürfen nicht zu niedrig gehalten werden, um eine Abscheidung von in der Luft vorhandenen Feuchtigkeit, die zur Schimmelpilzbildung führen würde, zu vermeiden. Derartige Kühlelemente eignen sich auch nicht zur Entfeuchtung der Raumluft, da ja die Abscheidung der in der Luft vorhandenen Feuchtigkeit wegen der bereits geschilderten Gefahren der Schimmelpilzbildung am Kühlelement vermieden werden soll.

Aus der WO06058959 A1 ist eine Kühlung von Luft für ein Treibhaus bekannt. Dabei wird warme Luft an Wasser, welches versprüht wird, vorbeigepumpt. Die Wärme der Luft wird an das Kühlwasser abgegeben. Zur Kühlung eines Raums bleibt eine Umwälzung von Luft erforderlich.

Aus der WO 95/22724 ist eine Vorrichtung zur Kühlung von Luft für Lebensmittelcontainer bekannt. Dabei strömt die zu kühlende Luft durch einen Aufbau, in dem die Luft an kühlem Wasser vorbeiströmt. Darüber hinaus sind Maßnahmen vorgesehen, Flüssigkeit in die Luft zu sprühen, um diese zu befeuchten.

Aus der JP H05 322 230 A ist eine Temperiereinrichtung für einen Raum bekannt, mit der ein Flüssigkeitsfilm bereitgestellt werden kann. Die Flüssigkeit kann auf eine gewünschte Temperatur gebracht werden, bevor sie durch Düsen in den Flüssigkeitsfilm eingebracht wird. Durch den Flüssigkeitsfilm erfolgt eine Temperierung des Raums und eine Reinigung der Luft.

Aufgabe der vorliegenden Erfindung ist es nun die Nachteile des Stands der Technik zu überwinden und eine Vorrichtung und ein Verfahren zur Kühlung und Entfeuchtung von Luft anzugeben, das sowohl die Geräuschentwicklung und Zugerscheinung Luft umwälzender Klimageräte als auch die Leistungsbegrenzung und die Schimmelpilzbildung von Kühlelementen vermeidet. Diese Aufgabe wird durch die Merkmale der unabhängigen Ansprüche gelöst. Vorteilhafte Ausführungen finden sich in den Unteransprüchen.

Erfindungsgemäß wurde erkannt, dass eine Vorrichtung zum Kühlen und/oder Entfeuchten von Luft eines Raums geschaffen werden muss, gemäß Patentanspruch 1.

Insbesondere ist es interessant, die Luft gleichzeitig zu kühlen und zu entfeuchten. Es ist zwar aus dem Stand der Technik durchaus bekannt, die Luft eines Raums durch Kühlflüssigkeit, die mit direktem Kontakt an der Luft vorbeiströmt, zu kühlen. So sind etwa in Cafés öfters Springbrunnen aufgestellt, mit denen eine Kühlung erreicht wird. Hierbei wird das Wasser zumeist umgewälzt und erwärmt sich durch längeren Betrieb des Springbrunnens. Es wird zwar auch eine Kühlwirkung durch die Verdunstung erreicht. Insbesondere bei schwülen Wetterbedingungen wird dadurch aber keine Erhöhung der Behaglichkeit erzielt, da zwar die unbehaglich hohen Temperaturen etwas gesenkt werden können. Dafür steigt aber die Luftfeuchtigkeit durch die Verdunstung an. Eine über die Verdunstungskälte hinausgehende Kühlung wäre beispielsweise durch die stete Verwendung von kühlerem Frischwasser denkbar, wäre aber unwirtschaftlich, da es zu einem unvertretbar hohen Frischwasserbedarf führen würde. Erst das Zusammenwirken der erfindungsgemäß vorgesehenen Bearbeitungseinheit, Verteilungseinheit und Sammeleinheit ermöglicht eine Vorrichtung, mit der die Raumluft ohne Befeuchtung gekühlt werden kann und zugleich ein Kühlmittelkreislauf gebildet werden kann, bei dem allenfalls geringe Mengen an Kühlmittel nachgefüllt werden müssen. Dabei können Verteilungseinheit, Bearbeitungseinheit und Sammeleinheit baulich zusammengefasst werden. Insbesondere kann die Verteilungseinheit die Sammeleinheit mit enthalten. Es ist auch möglich, dass die Sammeleinheit das Kühlmittel nicht unmittelbar der Bearbeitungseinheit zuführt, sondern zunächst einer weiteren Verteilungseinheit. Mit der erfindungsgemäßen Vorrichtung zum Kühlen ohne Befeuchtung kann je nach Betriebsweise auch eine aus dem Stand der Technik bekannte Kühlung ausschließlich durch Verdunstungskälte vorgenommen werden. Die Vorrichtung unterscheidet sich aber dadurch, dass eine über die Verdunstungskälte hinausgehende Kühlung möglich ist. Die über die Verdunstungskälte hinausgehende Kühlung wird dadurch erreicht, dass Wärme von der Luft an das Kühlmittel übertragen wird, welches dadurch seine sensible Wärme erhöht, also die Wärme durch Erhöhung der Temperatur aufnimmt. Auch wenn ein Teil der Kühlung durch Verdunstungskälte erfolgt und die Befeuchtung der Luft bei der Kühlung nur reduziert und nicht vermieden wird, kann die Behaglichkeit verbessert werden. Wiewohl verschiedene Kühlmittel denkbar sind, eignen sich vor allem Wasser und Gemische die Wasser enthalten als Kühlmittel.

Ebenfalls bekannt sind Klimageräte in denen die Raumluft durch gekühltes Wasser perlt oder damit besprüht wird (sog. Air-washer); dort wird die Luft aber mit Hilfe von Gebläsen dem Raum entnommen und anschließend wieder zugeführt. Somit bestehen hier die gleichen Probleme (z.B. Geräuschentwicklung, Zugerscheinungen), wie bei konventionellen Klimaanlagen. Dies ist erfindungsgemäß gerade nicht der Fall. Darüber hinaus kann bei derartigen Kühlgeräten die Kühlung durch Strahlung nicht genutzt werden, da das kühle Kühlmittel keine Strahlung aus dem zu kühlenden Raum aufnehmen kann. Mit der vorliegenden Erfindung ist es möglich, die Strahlungskälte des Kühlmittels zusätzlich zu nutzen.

An dieser Stelle ist erwähnt, dass unter dem Begriff "Raum" in erster Linie natürlich Räume von Gebäuden fallen. Der Begriff "Raum" ist aber weit zu verstehen. Es ist jeder Bereich zu verstehen, in dem sich Menschen, deren Behaglichkeitsempfinden zu steigern ist, aufhalten können. Es fallen also auch Fahrgasträume von Fahrzeugen und Flugzeugen darunter. Entscheidend ist, dass die Luft in dem Bereich bearbeitet wird, d.h. sich die Verteilungseinheit dort befindet, wo sich Menschen, deren Behaglichkeit zu steigern ist, befinden können. Es wird also nicht die Luft in einer separaten Einheit bearbeitet und dann in diesen Bereich gepumpt. Selbstverständlich ist der Begriff "Luft" nicht eng zu verstehen; etwa auch spezielle Gasgemische für die Belüftung von Räumen, die Feuchtigkeit enthalten können, fallen auch unter diesen Begriff.

Eine geeignete Verteilungseinheit für die Kühlflüssigkeit ist ein im Raum aufgestellter Springbrunnen. Dieser kann optisch ansprechend gestaltet werden. Es können hierbei auch Komponenten verwandt werden, die handelsüblich erhältlich sind, da Springbrunnen in Räumen ja durchaus bekannt sind.

Ebenso ist es denkbar, dass die Verteilungseinheit ein Wand- oder Raumelement ist, an dem ein dünner Flüssigkeitsfilm vorbeiströmen kann oder vorbei strömt. Mit einem dünnen Flüssigkeitsfilm ist es möglich, eine große Oberfläche von vorbeiströmender Kühlflüssigkeit zu schaffen. Es gestattet eine effiziente Kühlung oder Entfeuchtung.

Eine Möglichkeit die Verteilungseinheit zu realisieren, ist es Kühlflüssigkeitsrinnen auf oder unter dem Boden oder der Decke (mit entsprechenden Luftöffnungen) des Raums anzuordnen. Damit wird eine Platz sparende und wenig sichtbare Vorrichtung geschaffen.

Vorzugsweise handelt es sich bei der Bearbeitungseinheit um einen Kühler für die Kühlflüssigkeit. Durch eine ausreichende Kühlung wird nämlich erreicht, dass die Kühlflüssigkeit beim Vorbeiströmen an Luft diese kühlt ohne sie zu befeuchten. Solche Kühler sind im Stand der Technik hinreichend bekannt und können preisgünstig bezogen werden. Es gibt auch energieeffizient arbeitende Kühler, deren laufende Kosten sich in einem begrenzten Rahmen halten. Beim Vorbeiströmen der gekühlten Kühlflüssigkeit an der zu kühlenden Luft wird der Luft gegebenenfalls Feuchtigkeit entnommen. Dieses zusätzlich in den Kühlkreislauf gelangende Wasser stellt keinerlei Problem dar, zumal die Kühlflüssigkeit in der Regel ohnehin überwiegend aus Wasser besteht. Notfalls sind im System geeignete Überlaufbehälter oder Auslässe vorzusehen.

Eine weitere oder zusätzliche Möglichkeit, die Bearbeitungseinheit zu realisieren, ist, eine Beimischung von Zusatzstoffen, welche den Dampfdruck der Kühlflüssigkeit erniedrigen. Wird als Kühlflüssigkeit beispielsweise Wasser verwendet, kann z. B.durch die Zugabe entsprechend hygroskopisch wirkender Substanzen (z.B. Salze) der Dampfdruck erniedrigt werden. Ähnliches kann auch durch Zumischen einer Flüssigkeit zu Wasser erreicht werden. Dabei können mit Wasser mischbare Stoffe zugegeben werden, wodurch eine Lösung entsteht, deren Dampfdruck niedriger als der von reinem Wasser sein kann. Ebenso können mit Wasser nicht mischbare Stoffe zugesetzt werden. Hier kann die Senkung der Oberfläche zu einer Senkung des Dampfdrucks führen. Damit kann die Verdunstung des Wassers auch bei höheren Temperaturen des Kühlmittels soweit reduziert werden, dass die Kondensation der Raumluftfeuchte an der Oberfläche der Kühlflüssigkeit überwiegt und keine Feuchtigkeitsabgabe in die Raumluft erfolgt. Vielmehr wird aus der Raumluft Feuchtigkeit entnommen. Dabei sinkt die Konzentration der beigemengten Stoffe (z.B. hygroskopische Salze), welche den Dampfdruck erniedrigen, so dass eine Regeneration der Kühlflüssigkeit zu erfolgen hat. In der Bearbeitungseinheit können diese Stoffe wieder zugegeben werden. Für einen kontinuierlichen Betrieb ist es aber insbesondere sinnvoll, in der Bearbeitungseinheit von der Kühlflüssigkeit aufgenommenes Wasser beispielsweise durch Verdunstung oder Eiskristallbildung auszutreiben und so die Ausgangskonzentration der Beimischungen wieder einzustellen. Dies ist freilich mit einem gewissen Energieaufwand verbunden. Zur Verdunstung muss die Kühlflüssigkeit entweder erwärmt oder einem niedrigeren Umgebungsdruck ausgesetzt werden. Zur Regenation der Kühlflüssigkeit durch Eiskristallbildung muss weiter herunter gekühlt werden und das Eis abgeschöpft werden. Diese Maßnahmen können jedoch auch in einem Nebenstrom erfolgen, der anschließend dem Hauptstrom wieder zugemischt wird.

Eine stabile und geräuscharme Strömung wird erreicht, wenn der Kühlflüssigkeit Zusätze zugeführt werden, welche Turbulenzen bei der Strömung vermeiden. Verwendet man als Kühlmittel Wasser so eignen sich langkettige Polymere zur Laminarisierung der Strömung. Solche Zusätze unterbinden die Bildung von Mikrowirbeln und bewirken dadurch auch bei höheren Reynoldszahlen eine reibungs- und geräuscharme laminare Strömung.

Unabhängig von Zusätzen, welche Turbulenzen bei der Strömung vermeiden, sind auch Zusätze denkbar, die biozid wirken. Damit können hygienische Probleme vermieden werden. Zur erhöhten Akzeptanz der erfindungsgemäßen Vorrichtung können auch geeignete geruchsaktive Substanzen der Kühlflüssigkeit zugegeben werden. Denkbar ist auch der Zusatz von weiteren Substanzen zur Erhöhung der Aufnahmefähigkeit der Kühlflüssigkeit von Schadstoffen in der Raumluft.

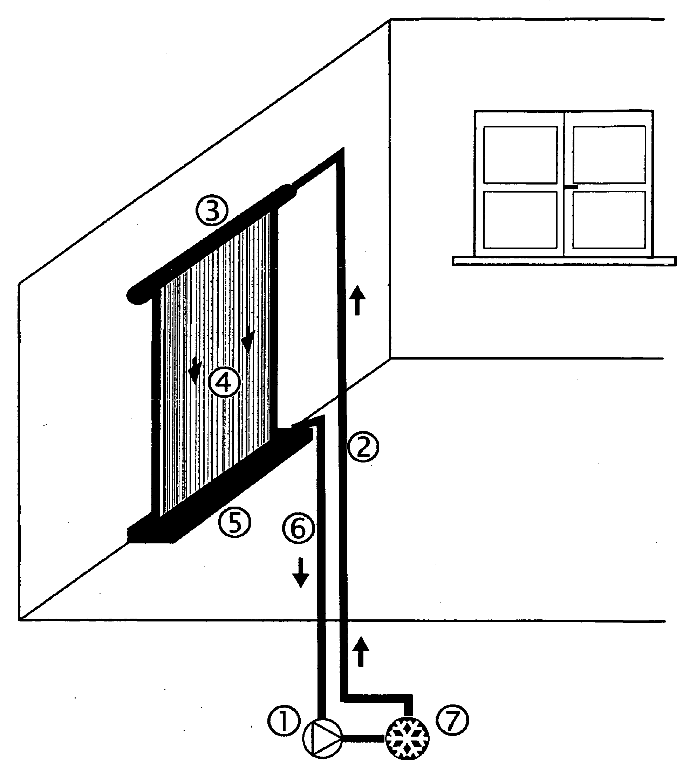

Anhand der Skizze gemäß Figur 1 soll ein Ausführungsbeispiel erläutert werden. Mit der Pumpe 1 wird Wasser durch die Zuleitung 2 an ein waagrechtes Rohr 3 geführt, welches an seiner Unterseite einen Öffnungsschlitz aufweist. Durch diesen Öffnungsschlitz fließt das Wasser als Wasserfilm 4 heraus. Unten ist ein Sammelbecken 5 angebracht, aus dem das Wasser durch die Ableitung 6 wieder zur Pumpe 1 gepumpt wird. Von der Pumpe 1 wird das Wasser wieder zur Zuleitung 2 gepumpt, wobei es im nach der Pumpe 2 angeordneten Kühler 7 gekühlt wird.

## Patentansprüche

1. Vorrichtung zum Kühlen und Entfeuchten von Luft eines Raums, in dem sich Menschen aufhalten können, umfassend eine Bearbeitungseinheit (7)zur Bearbeitung der Kühlflüssigkeit,
eine Verteilungseinheit (3), welche geeignet ist, die Kühlflüssigkeit an der im Raum befindlichen Luft mit direktem Kontakt vorbeiströmen zu lassen,
eine Sammeleinheit (5), welche geeignet ist, die an der Luft vorbeigeströmte Kühlflüssigkeit der Bearbeitungseinheit wieder zuzuführen,
**dadurch gekennzeichnet, dass** die Bearbeitungseinheit (7) ausgebildet ist, die Kühlflüssigkeit derart zu bearbeiten, dass sie geeignet ist, beim Kontakt mit der Luft diese zu entfeuchten und zu kühlen, wobei eine über die Verdunstungskälte hinausgehende Kühlung erreichbar ist.

2. Vorrichtung nach Anspruch 1, **dadurch gekennzeichnet, dass** die Verteilungseinheit (3) eine im Raum aufgestellte Vorrichtung nach Art eines Springbrunnens ist oder diese enthält

3. Vorrichtung nach einem der Ansprüche 1 oder 2, **dadurch gekennzeichnet, dass** die Verteilungeinheit (3) ein Wand- oder Raumelement ist oder ein Wand- oder Raumelement enthält, an dem ein dünner Flüssigkeitsfilm (4) vorbeiströmen kann oder vorbeiströmt.

4. Vorrichtung nach einem der Ansprüche 1 bis 3, **dadurch gekennzeichnet, dass** die Verteilungseinheit (3) in Form von Kühlflüssigkeitsrinnen auf oder unter dem Boden und/oder der Decke des Raums ausgebildet ist oder solche Kühlrinnen enthält.

5. Vorrichtung nach einem der Ansprüche 1 bis 4, **dadurch gekennzeichnet, dass** die Verteilungseinheit (3) ein im Raum aufgestelltes Kühlgerät mit mindestens einer Öffnung für die zu bearbeitende Luft ist, in dem ein Flüssigkeitsfilm (4) strömen kann oder strömt.

6. Vorrichtung nach einem der Ansprüche 1 bis 5, **dadurch gekennzeichnet, dass** die Bearbeitungseinheit (7) ein Kühler für die Kühlflüssigkeit ist.

7. Vorrichtung nach einem der Ansprüche 1 bis 6, **dadurch gekennzeichnet, dass** die Bearbeitungseinheit (7) so ausgebildet ist, dass die Konzentration von Zusatzstoffen, welche den Dampfdruck der Kühlflüssigkeit erniedrigen, erhöht werden kann.

8. Vorrichtung nach einem der Ansprüche 1 bis 7, **dadurch gekennzeichnet, dass** die Kühlflüssigkeit Zusätze enthält, welche Turbulenzen bei der Strömung vermeiden.

9. Vorrichtung nach einem der Ansprüche 1 bis 8, **dadurch gekennzeichnet, dass** die Kühlflüssigkeit Zusätze enthält, welche Schadstoffe oder Gerüche in der Raumluft zu binden vermögen.

10. Verfahren zur Kühlung und Entfeuchtung von Luft in einem Raum, welches die folgenden Schritte enthält:
• Bearbeitung der Kühlflüssigkeit
• Verteilung der Kühlflüssigkeit in einem Raum, in dem sich Menschen aufhalten können, so dass die Kühlflüssigkeit an der Luft mit direktem Kontakt vorbeiströmt
• Sammeln der an der Luft vorbeigeströmten Kühlflüssigkeit zur nochmaligen Bearbeitung, so dass sich ein Kühlkreislauf ergibt,
**dadurch gekennzeichnet, dass**
die Kühlflüssigkeit derart bearbeitet wird, dass sie geeignet ist, beim Kontakt mit der Luft diese zu entfeuchten und zu kühlen, wobei eine über die Verdunstungskälte hinausgehende Kühlung erfolgt.

## Claims

1. Device for cooling and dehumidifying the air of a room in which people may be, comprising a processing unit (7) for processing the coolant,
a distribution unit (3), which is suitable for causing the coolant to flow past the air in the room with direct contact,
a collecting unit (5), which is suitable for feeding coolant that has flowed past the air back to the processing unit
**characterized in that** the processing unit (7) is embodied processing the coolant such that it is suitable for dehumidifying and cooling the air upon contact therewith, wherein cooling exceeding the cold due to evaporation can be achieved.

2. Device according to claim 1, **characterized in that** the distribution unit (3) is or contains a device in the manner of a fountain installed in the room.

3. Device according to one of claims 1 or 2, **characterized in that** the distribution unit (3) is a wall or room unit or contains a wall or room unit, on which a thin liquid film can flow past or flows past.

4. Device according to one of claims 1 through 3, **characterized in that** the distribution unit (3) is embodied in the form of coolant grooves on or under the floor and/or the ceiling of the room or contains such cooling grooves.

5. Device according to one of claims 1 through 4, **characterized in that** the distribution unit (3) is a cooling device installed in a room and having at least one opening for the air to be processed, in which a liquid film (4) can flow or flows.

6. Device according to one of claims 1 through 5, **characterized in that** the processing unit (7) is a cooler for the coolant.

7. Device according to one of claims 1 through 6, **characterized in that** the processing unit (7) is embodied such that the concentration of additives that reduce the vapor pressure of the coolant can be increased.

8. Device according to one of claims 1 through 7, **characterized in that** the coolant contains additives that avoid turbulences in the flow.

9. Device according to one of claims 1 through 8, **characterized in that** the coolant contains additives that can bind contaminants or odors in the room air.

10. Method for cooling and dehumidifying air in a room, containing the following steps:
- Processing the coolant;
- Distribution of the coolant in a room in which people may be, so that the coolant flows past the air with direct contact;
- Collection of the coolant that has flowed past the air for processing again, so that a cooling circuit is produced;
**characterized in that** the coolant is processed such that it is suitable for dehumidifying and cooling the air upon contact therewith, wherein cooling exceeding the cold due to evaporation occurs.

## Revendications

1. Ensemble de refroidissement et de deshumidification de l'air d'un local dans lequel des personnes peuvent se tenir, l'ensemble comprenant
une unité de traitement (7) qui traite le liquide de refroidissement,
une unité de distribution (3) qui convient pour faire s'écouler le liquide de refroidissement en contact direct avec l'air présent dans le local,
une unité de collecte (5) qui convient pour renvoyer vers l'unité de traitement le liquide de refroidissement qui a été balayé par l'air,
**caractérisé en ce que**
l'unité de traitement (7) est configurée pour traiter le liquide de refroidissement de telle sorte qu'il puisse deshumidifier et refroidir l'air lors du contact avec ce dernier, un refroidissement allant au-delà du refroidissement par évaporation pouvant être obtenu.

2. Ensemble selon la revendication 1, **caractérisé en ce que** l'unité de distribution (3) contient un ensemble de type fontaine ou contenant un tel ensemble, placé dans le local.

3. Ensemble selon l'une des revendications 1 ou 2, **caractérisé en ce que** l'unité de distribution (3) est un élément de paroi ou du local ou contient un élément de paroi ou du local sur lequel un mince film de liquide (4) peut s'écouler ou s'écoule.

4. Ensemble selon l'une des revendications 1 à 3, **caractérisé en ce que** l'unité de distribution (3) présente la forme de rigoles à liquide de refroidissement situées sur ou en dessous du sol et/ou du plafond du local, ou contient de telles rigoles de refroidissement.

5. Ensemble selon l'une des revendications 1 à 4, **caractérisé en ce que** l'unité de distribution (3) est un appareil de refroidissement placé dans le local, présentant au moins une ouverture pour l'air à traiter et dans lequel un film de liquide (4) peut s'écouler ou s'écoule.

6. Ensemble selon l'une des revendications 1 à 5, **caractérisé en ce que** l'unité de traitement (7) est un refroidisseur du liquide de refroidissement.

7. Ensemble selon l'une des revendications 1 à 6, **caractérisé en ce que** l'unité de traitement (7) est configurée de manière à permettre d'augmenter la concentration en additif qui abaisse la tension de vapeur du liquide de refroidissement.

8. Ensemble selon l'une des revendications 1 à 7, **caractérisé en ce que** le liquide de refroidissement contient des additifs qui permettent d'éviter des turbulences lors de l'écoulement.

9. Ensemble selon l'une des revendications 1 à 8, **caractérisé en ce que** le liquide de refroidissement contient des additifs qui sont capables de se lier à des substances nocives ou odorantes présentes dans l'air du local.

10. Procédé de refroidissement et de deshumidification de l'air dans un local, le procédé comportant les étapes suivantes :
traitement du liquide de refroidissement,
distribution du liquide de refroidissement dans un local dans lequel des personnes peuvent se tenir de telle sorte que le liquide de refroidissement soit balayé par l'air en contact direct avec ce dernier,
rassemblement du liquide de refroidissement balayé par l'air en vue d'un nouveau traitement, de sorte que l'on obtient un circuit de refroidissement,
**caractérisé en ce que**
le liquide de refroidissement est traité de manière à convenir pour deshumidifier et refroidir l'air au contact avec ce dernier, avec un refroidissement qui va au-delà du refroidissement par évaporation.
